# EUROPEAN PATENT SPECIFICATION

(11) **EP 3 255 367 B1**
(45) Date of publication and mention of the grant of the patent: **12.12.2018**
(21) Application number: 16174016.2
(22) Date of filing: 10.06.2016
(51) Int. Cl.: F27B 7/02, C04B 7/32, C04B 7/345, F27B 7/20, F27B 7/38

(54) **DEVICE FOR MANUFACTURING BELITE CALCIUM SULFOALUMINATE TERNESITE CLINKER**
VORRICHTUNG ZUR HERSTELLUNG VON BELIT-CALCIUMSULFOALUMINAT-TERNESIT KLINKER
DISPOSITIF DE FABRICATION DE CLINKER TERNESITE SULFOALUMINATE DE CALCIUM EN BÉLITE

(43) Date of publication of application: 13.12.2017
(73) Proprietor: HeidelbergCement AG, 69120 Heidelberg (DE)
(72) Inventor: MAJCHROWICZ, Marek, PL-47-143 Olszowa (PL); CAMBIER, Pierre-Olivier, 1320 Hamme-Mille (BE)
(74) Representative: Zellentin & Partner mbB Patentanwälte

(56) References cited:
- AT-B- 207 309
- CH-A- 220 160

## Description

The present invention relates to a device for manufacturing belite calcium sulfoaluminate ternesite clinker.

Calcium sulfoaluminate (C$A) cements have been known for a long time and are considered to have less impact on the environment than ordinary Portland cement (OPC). This is because they are sintered at lower temperature and require less limestone. Both will result in less carbon dioxide emitted. C$A cements have ye'elimite as main clinker phase, that reacts hydraulically with anhydrite and water to form ettringite as strength providing phase. C$A cements have been used in binders to replace OPC, but also as an addition to OPC to enhance early strength of OPC and/or to counteract the shrink during OPC hardening. Newer developments provide for a considerable amount of belite in the C$A cement, that is beneficial for its use as a binder. Depending on the amount of iron in the raw material, ye'elimite can contain a large amount of iron which substitutes aluminium. Also substantial amounts of ferrite can be contained in the C$A clinker.

A recent development showed that ternesite, a phase long known as undesired secondary phase in the manufacture of C$A clinkers, can be a very reactive phase in C$A cements and binders, see WO 2013/023731 A2, WO 2013/023729 A2, and WO 2013/023728 A2. Ternesite is a desired phase, therefore. However, its production requires a specific tempering when the C$AT clinker is to be made in one process and not by mixing C$A and ternesite. That is because ye'elimite has an optimal sintering temperature of 1250 to 1350°C, whereas ternesite is only stable up to less than 1200°C.

The proposition to stabilize ternesite at higher temperature with chrome mineralizers in the not prior published or EP 15001838.0 is one possible solution, but it requires addition of chrome. This might not always be feasible or desired.

Thus, the method described in WO 2013/023731 A2 is still the most promising approach for manufacturing belite calcium sulfoaluminate ternesite (BC$AT) clinkers. Present OPC manufacturing plants with rotary kilns do not foresee any tempering stage, so there is a need for a device that enables tempering of the clinker made in the rotary kiln and the object remains to provide a suitable plant for making BC$AT clinker.

The object is surprisingly solved by a device for manufacturing cement clinker comprising a rotary kiln and a clinker cooler wherein the clinker leaving the rotary kiln is passed into a tempering device comprising a control unit with means for adjusting the temperature and the residence time, i.e. providing a regulated speed of material flow and temperature profile inside the tempering device.

Attempts to provide for tempering inside the rotary kiln or in the existing coolers failed. It is not possible to keep the same temperature and regulate the required retention time in these devices. It would be possible to enlarge the rotary kiln to provide the tempering zone after the burning zone in theory. But this would create significant design modification: much longer kiln tube and heat delivery for the burning process. Providing the heat into the burning process in very long kilns requires special design of the kiln burner. The burner would become very long and heavy while it must be protected by refractories, its support would have to be extremely strong - enforcement of foundations. Thus, the whole modification would become economically not viable. Such modification would also require to install an additional burner to keep the temperature in the tempering zone stable. All this would complicate the system and make its operation impossible to control. There is another important issue in such matter. The residence time for formation of belite and sulfoaluminate clinker phases can be different than for the ternesite clinker phase. Any common device is not providing that. Clinker coolers are primarily designed to cool the clinker as fast as possible while the design minimises the required equipment for this process. Theoretically, present coolers could be modified to provide tempering process for ternesite formation thus to allow enough retention time and temperature to temper the clinker. However, there would be no air flow control above the clinker bed and colder air from further part of modified cooler which would certainly pass the cooler inlet area would be cold enough to cool the belite calcium sulfoaluminate clinker below the required tempering temperature. Additionally the steel used for construction of grates that are presently used for both transport and cooling the clinker would become too hot and be destroyed after rather short time due to the insufficient cooling.

So as to simplify the description the following abbreviations that are usual in the cement industry are used herein: H - H₂O, C - CaO, A - Al₂O₃, F - Fe₂O₃, M - MgO, S - SiO₂ und $ - SO₃. Compounds are mostly named by the pure form, without explicit mentioning of solid solutions, foreign ion substitution and impurities etc. as are usual in technical and industrial materials. As the man skilled in the art knows, the exact composition of the phases described may vary due to substitution with foreign ions. Such compounds are comprised when mentioning the pure form herein unless it is expressly stated otherwise.

The term "reactive" shall mean a hydraulic reactivity unless specified otherwise.

Herein, clinker designates a sinter product obtained by burning a raw material at elevated temperature and containing at least one hydraulic phase. Burning means a change of one or more property of the starting material such as chemistry, crystallinity, phase composition, spatial arrangement and bonds of lattice atoms which is brought about by a supply of thermal energy. The starting material may be a single material, but usually it is a mixture. The starting material is typically finely ground and then designated as raw meal. The starting material may contain mineralizers, which are substances decreasing the temperature necessary for melting and/or act as fluxes and/or enhance clinker formation e.g. by forming solid solutions or stabilisation of phases. Mineralizers can be part of the starting material components or be added as separate component.

Cement denotes a clinker ground with or without further components. Additionally, the term includes other materials and mixtures developing mechanical strength by a hydraulic reaction, for example super sulphated cement, geo-polymer binder, and belite cement obtained by hydrothermal treatment. Binder or binder mixture means a material or mixture containing cement and developing mechanical strength by a hydraulic reaction with water wherein the binder typically but not necessarily contains more components than the cement. A binder is used adding water and mostly also aggregate as well as optionally admixtures and/or additives.

Clinker substituting material, abbreviated SCM, denotes a pozzolanic and/or latent-hydraulic material, which substitutes a part of the cement in a binder. Latent-hydraulic materials have a composition allowing hydraulic reaction upon contact with water. Typically they need an activation to provide strength within a practically useful period of time. Activator means a material suitable to accelerate the hardening of latent-hydraulic materials. Pozzolanic materials are characterized by a content of reactive silica or alumina being able to form hardened phases together with calcium hydroxide present in the pore solution of a hydraulically hardening binder. In practice the distinction between pozzolanic and latent-hydraulic material is often ill defined. For example fly ashes are usually considered pozzolans but may be latent-hydraulic when they contain relevant amounts of calcium oxide. SCM comprises both latent-hydraulic and pozzolanic materials. However, not reactive mineral additions like stone dust that do not take part in the hydraulic reaction of the binder are not comprised within the term SCM. Sometimes the term mineral additions is used in the art to designate such inert materials and SCMs together.

A clinker may comprise all necessary or desired phases, respectively, so that it directly forms the binder after grinding it to a cement. Most often a binder is composed of cement mixed with further components, and also two or more clinkers/cements are possible. Thereby, the mixing can take place before, during or after grinding the clinker(s). Unless specified, binders are not restricted in that point.

In the device according to the invention the rotary kiln and cooler, as well as other parts of the cement plant like the raw meal preparation and the preheating/calcining section, can be designed in any known manner. As usual, the device design takes into account the specific raw materials and fuels to be used. Of course it should also take into account environmental aspects, e.g. avoiding energy waste and emissions of nitrogen oxides, sulphur, heavy metals etc. in the exhaust gas. To this end heat contained in exhaust gas streams should be made useful as far as possible. Exhaust gas is purified by known means.

The clinker can be produced in wet, long dry, preheater and precalciner units. State of the art kilns are precalciner kilns where the preheating and calcination process is taking place in a special reactor called precalciner or simpler calciner. The final burning process takes place in the rotary kiln. In OPC production the obtained clinker is fast cooled in a satellite/grate/reciprocating/shuttle floors cooler. The clinker is not only cooled in the cooler but significant heat that leaves the kiln with the hot clinker is recuperated by air. This hot air is used for combustion as a secondary and/or tertiary air.

In contrast to OPC, ternesite is formed by tempering of an intermediate clinker comprising belite and ye'elimite made in any type of cement kiln. The tempering time will be from 30 seconds to 60 minutes, preferably from 10 to 30 minutes, depending on the desired quantity of ternesite in the clinker.

According to the invention the tempering is carried out in an additional tempering device interposed between rotary kiln and cooler. The tempering device is equipped with a control means that regulates material flow speed and temperature inside the tempering device to maintain a desired temperature of the clinker for a residence time sufficient to form the desired amount of ternesite. Advantageously, the temperature can be controlled with a controlled gas flow and/or a heating means. The material flow speed and therewith the residence time can be controlled via the speed of rotation and/or inclination in tube shaped tempering devices or via the speed of the grate/shuttle system in travelling grate tempering devices.

In one embodiment, the temperature control is achieved via introducing gas, preferably air, into the tempering device. The gas is introduced in a defined amount and at a defined temperature. Herein, the tempering device is typically designed as a travelling grate. The air used for temperature control is preferably ambient air, either from outside or from the final clinker cooling system like rotary/grate/reciprocating/shuttle/walking floors coolers.

In a second embodiment the tempering device comprises a heating means, e.g. a burner, that allows to maintain the clinker at a desired temperature. In this embodiment the tempering device can preferably be formed by a rotary tube. Heating can be provided by combustion of any type of fuel (conventional or alternative fuels) by a burner installed inside the tempering device (rotary unit, grate/reciprocating/shuttle/walking floors units) that precedes the final ternesite clinker cooler system. Air required for combustion can be provided from ambient air - outside of the installation - or from a final clinker cooling system like a rotary/grate/reciprocating/shuttle/walking floors cooler.

Both means of temperature control are preferably combined. Control units that measure the temperature and adjust e.g. the amount of heat generated or a gas flow introduced to maintain the desired temperature are known as such. The same applies to the control of the material flow speed.

It is to be noted that as in known devices the air used to cool the clinker rapidly inside the cooler is passed into the rotary kiln to provide preheated air for burning. This air typically passes at least partially through the tempering device. If that is not desired, the air from the cooler can by-pass the tempering device and be fed directly into the rotary kiln. Another option is to feed the air from the cooler to the preheater/calciner section that precedes every rotary kiln and/or to use it in raw material and/or fuel drying. Such embodiments are useful when the temperature control in the tempering device uses air and the stream of air fed to the tempering device suffices for burning of the fuel in the rotary kiln.

The present invention will now be described in detail with reference to the accompanying figures, in which:
Figure 1 shows a rotary tube as tempering device
Figure 2 shows a travelling grate as tempering device
Figure 3 shows an alternative travelling grate as tempering device and
Figure 4 a combined tempering device and cooler.

The invention includes all combinations of described and especially of preferred features that do not exclude each other. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit. If not otherwise specified any amount in % or parts is by weight and in the case of doubt referring to the total weight of the composition/mixture concerned.

The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

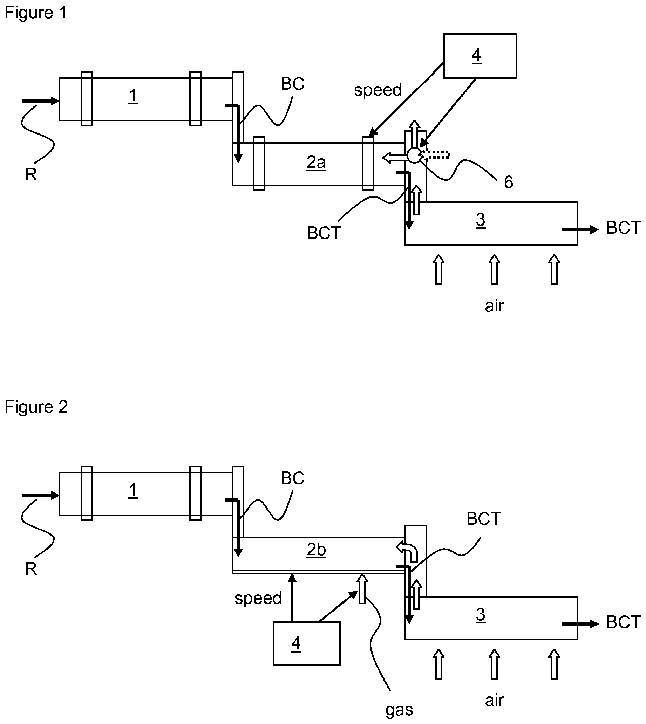

Figure 1 illustrates a first embodiment of a cement plant according to the invention. Shown are the rotary kiln 1, the tempering device 2 and the cooler 3. Other parts are not shown for sake of clarity but are of course present as usual. Preheated raw meal R is fed to the rotary kiln 1 and sintered to form an intermediate clinker BC, mainly comprising belite and calcium sulfoaluminate. The raw meal R can be made from minerals but also and preferably at least partly from wastes and side products. In the kiln burner both classical fuels like coal, oil, gas and alternative fuels like tires, industrial and municipal waste, paper sludge and so on can be used. The temperature in the rotary kiln is adjusted to provide the desired amounts of belite and calcium sulfoaluminate, typically 1200 to 1300 °C are applied.

The intermediate clinker BC leaves the rotary kiln 1 and is passed into a rotary tube 2a that forms the tempering device 2 in this embodiment. Such a device has to be avoided in OPC production, since the cooling of OPC should be as fast as possible to preserve the clinker phases obtained by sintering. In contrast thereto, the device according to the invention has to allow a slow cooling designated tempering to obtain ternesite and possibly enable conversion of remaining unwanted phases into ye'elimite and other desired phases. For example, it is known that iron will be incorporated into ye'elimite during tempering, rendering that phase more reactive and increasing its content.

In the tempering device the intermediate clinker BC is cooled slowly by the air coming from the cooler 3. The temperature will typically decrease from about 1200 °C to about 750 °C during a residence time of the intermediate clinker in the rotary tube 2a from 30 seconds to 30 minutes. A control unit 4 ensures that the air passing from the cooler 3 into the rotary tube 2a in counter current to the clinker has the correct cooling capacity. If too much air comes from the cooler 3, some is by-passed either directly into kiln 1 or into the preheater/calciner. If the air is too hot or not enough, additional air is passed into the tempering device 2, indicated by a dashed arrow. To this end, the control unit 4 actuates a regulated valve 6 which changes its position in relation to the required temperature determined by a measurement unit installed in the connecting point between rotary kiln 1 and tempering device 2. An arrow connecting the control unit 4 with the valve 6 indicates the control of the valve 6 by the unit 4. Air/gas distribution is provided by the kiln ID-fan installed after the preheater system (this is typically used equipment in OPC clinker production with the very same function of air/gas distribution). The material residence time in the tube 2a is controlled by the control unit 4 via a drive unit that changes the rotational speed of the rotary tube 2a. Control is indicated with an arrow from unit 4 to the tube 2a.

Within the residence time in the tempering device 2 the final clinker BCT is formed and passes into the cooler 3 where it is rapidly cooled in air in the same manner as OPC clinker would be cooled. The cooled clinker BCT can then be processed further as desired, i.e. stored or ground right away, with or without additional components.

Figure 2 shows an alternative tempering device 2, namely a travelling grate 2b. All parts that are identical to those in Figure 1 are not described again and have the same reference numbers. The device in Figure 2 lends itself to a use for bigger amounts of clinker made in the same time, where the heat brought into the tempering device 2 by the intermediate clinker BC needs more effective cooling to provide a temperature inside the desired range. Cooling gas, usually air, is used in combination with or possibly instead of the air coming from the cooler 3. The control unit 4 ensures that the desired temperature regime is obtained inside the tempering device 2b and ensures that the speed of the travelling grate 2b provides the appropriate residence for the material on the travelling grate 2b. Regulation of the speed of the grate 2b is indicated by arrows connecting the unit 4 with the grate 2b.

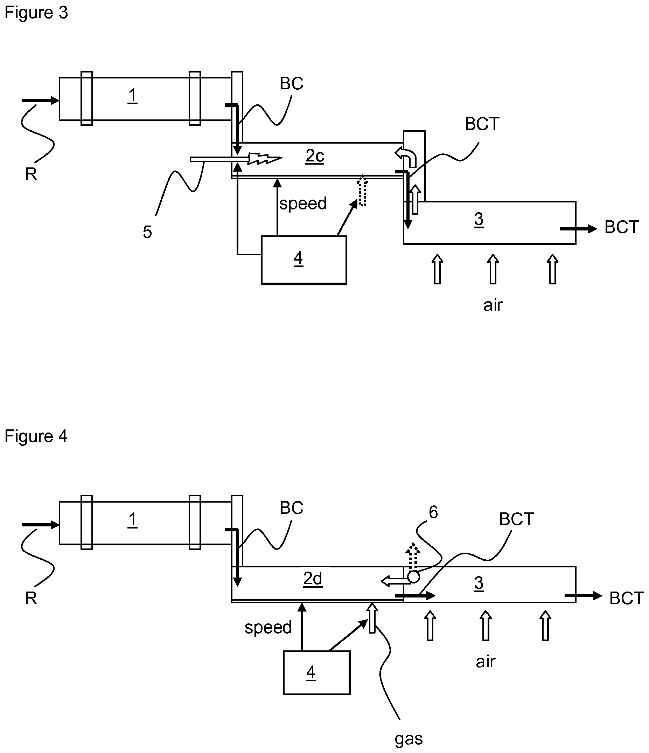

The tempering device 2 in Figure 3 is a travelling grate 2c with a burner 5 as heating means for temperature control. Such a tempering device is especially useful for an intermediate clinker BC that has been sintered at lower temperatures and does not bring enough heat into the tempering device 2 itself. Air from the cooler 3 adjusts the temperature inside the tempering device 2c in combination with the burner 5. The control unit 4 ensures that material is present on the travelling grate 2c for the desired time. Preferably an optional gas, preferably air, supply is present, indicated by the dashed arrow. Control of the optional gas supply is indicated with the arrow from unit 4 to the dashed arrow.

In Figure 4 the tempering device is a travelling grate 2d made integral with the cooler 3 which is a grate cooler in this case. However, in contrast to normal coolers the tempering device 2 has a control unit 4 that regulates the amount and temperature of the gas, preferably air, inside this part of the combined device. The control unit 4 also regulates the speed and therewith ensures that material is present on this travelling grate 2d long enough. The grate 2d must be independent in operation from the grate cooler 3 driving system. Furthermore, a part of the air from the cooler 3 can by-pass the tempering device 2d when needed as indicated with the dashed arrow. Therewith, a correct tempering time and temperature can be provided which is not possible in a cooler according to the state of the art.

It is most preferred that the tempering device 2 comprises both heating means and variable gas supply to be able to adjust to differing needs for tempering. In that way the device is universally useful regardless of the sintering temperature and amount of clinker made. It is envisaged that existing coolers might be extended with a separate traveling grate and provided with temperature control means and a control unit to form an integrated tempering device and cooler.

### List of reference numbers:

- 1: rotary kiln
- 2: tempering device
- 3: cooler
- 4: control unit
- 5: heating means, burner
- 6: valve

- R: raw meal
- BC: intermediate clinker
- BCT: final belite calcium sulfoaluminate ternesite clinker

## Claims

1. Device for manufacturing belite calcium sulfoaluminate ternesite clinker, comprising a rotary kiln (1) and a cooler (3),
**characterized in that**
a tempering device (2) is provided between an outlet of the rotary kiln (1) and the cooler (3), wherein the tempering device (2) comprises a control unit (4) that regulates a temperature control means and the material residence time.

2. Device according to claim 1, **characterized in that** the temperature control means comprise a heating means (5) and/or a gas supply.

3. Device according to claim 1 or 2, wherein the tempering device (2) is a rotary tube (2a).

4. Device according to claim 3, wherein the control unit (4) adjusts the rotational speed of the rotary tube (2a) to adjust the residence time.

5. Device according to claim 1 or 2, wherein the tempering device (2) is a travelling grate (2b, 2c, 2d).

6. Device according to claim 5, wherein the tempering device (2d) and the cooler (3) are made integral.

## Patentansprüche

1. Vorrichtung zur Herstellung von Belit-Calciumsulfoaluminat-Ternesit-Klinker, umfassend einen Drehrohrofen (1) und einen Kühler (3),
**dadurch gekennzeichnet, dass**
eine Tempereinrichtung (2) zwischen einem Auslaß des Drehrohrofens (1) und dem Kühler (3) vorgesehen ist, wobei die Tempereinrichtung (2) eine Steuereinheit (4) aufweist, die eine Temperaturkontrollvorrichtung und die Materialverweilzeit regelt.

2. Vorrichtung gemäß Anspruch 1, **dadurch gekennzeichnet, dass** die Temperaturkontrollvorrichtung eine Heizeinrichtung (5) und/oder eine Gasversorgung umfassen.

3. Vorrichtung gemäß Anspruch 1 oder 2, wobei die Tempervorrichtung (2) ein Drehrohr (2a) ist.

4. Vorrichtung gemäß Anspruch 3, wobei die Steuereinheit (4) die Rotationsgeschwindigkeit des Drehrohrs (2a) einstellt, um die Verweilzeit einzustellen.

5. Vorrichtung gemäß Anspruch 1 oder 2, wobei die Tempervorrichtung (2) ein Wanderrost (2b, 2c, 2d) ist.

6. Vorrichtung gemäß Anspruch 5, bei der die Tempervorrichtung (2d) und der Kühler (3) einstückig ausgebildet sind.

## Revendications

1. Dispositif de fabrication de clinker à base de bélite-sulfoaluminate de calcium-ternésite, comprenant un four rotatif (1) et un dispositif de refroidissement (3), **caractérisé en ce que** l'on prévoit un dispositif de régulation thermique (2) entre une sortie du four rotatif (1) et le dispositif de refroidissement (3); dans lequel le dispositif de régulation thermique (2) comprend une unité de commande (4) qui régule un moyen de réglage de la température ainsi que le temps de séjour de la matière.

2. Dispositif selon la revendication 1, **caractérisé en ce que** le moyen de réglage de la température comprend un moyen de chauffage (5) et/ou une alimentation de gaz.

3. Dispositif selon la revendication 1 ou 2, dans lequel le dispositif de régulation thermique (2) est un tube rotatif (2a).

4. Dispositif selon la revendication 3, dans lequel l'unité de commande (4) règle la vitesse de rotation du tube rotatif (2a) dans le but de régler le temps de séjour.

5. Dispositif selon la revendication 1 ou 2, dans lequel le dispositif de régulation thermique (2) est une grille mobile (2b, 2c, 2d).

6. Dispositif selon la revendication 5, dans lequel le dispositif de régulation thermique (2d) et le dispositif de refroidissement (3) sont réalisés en une seule pièce.
